# EUROPÄISCHE PATENTSCHRIFT

(11) **EP 1 641 643 B1**
(45) Veröffentlichungstag und Bekanntmachung des Hinweises auf die Patenterteilung: **16.01.2008**
(21) Anmeldenummer: 04763009.0
(22) Anmeldetag: 18.06.2004
(51) Int. Cl.: B60H 1/00

(54) **KLIMATISIERUNGSEINRICHTUNG FÜR FAHRZEUGE**
AIR-CONDITIONING SYSTEM FOR VEHICLES
DISPOSITIF DE CLIMATISATION POUR VEHICULE

(30) Priorität: 30.06.2003 DE 10329582; 20.02.2004 DE 102004008862
(43) Veröffentlichungstag der Anmeldung: 05.04.2006
(73) Patentinhaber: Behr GmbH & Co. KG, 70469 Stuttgart (DE)
(72) Erfinder: KIEL, Ronny, 70771 Leinfelden-Oberaichen (DE); MÖLLERT, Thorsten, 70499 Stuttgart (DE); LARPENT, Stéphanie, Shinjuku ku Tokio 162-0843 (JP)
(74) Vertreter: Grauel, Andreas
(86) Internationale Anmeldenummer: PCT/EP2004/006635
(87) Internationale Veröffentlichungsnummer: WO 2005/000612

(56) Entgegenhaltungen:
- WO-A-01/08911
- DE-A- 4 305 253
- DE-C- 3 826 182
- DE-U- 9 110 870
- FR-A- 2 547 543
- FR-A- 2 715 352
- FR-A- 2 765 526

## Beschreibung

Die vorliegende Erfindung betrifft eine Klimatisierungseinrichtung für Fahrzeuge.

Eine Klimatisierungseinrichtung für ein Fahrzeug setzt sich typischerweise aus einem ein- oder mehrteiligen Gehäuse, einem Gebläse zur Ansaugung von Frisch- oder Umluft, einem Wärmetauscher, insbesondere einem Verdampfer zur Kühlung der Luft, einem zweiten Wärmetauscher zur Erwärmung der Luft, einer Vorrichtung zur Temperierung eines Hauptluftstroms und einem Mischraum zusammen.

Ein vom Verdampfer austretender gekühlter Luftstrom wird vorzugsweise als ein erster Teilluftstrom über einen direkten Kanal oder Kaltluftkanal in eine Mischkammer geleitet und als ein zweiter Teilluftstrom über einen weiteren Kanal, einem stromabwärts des Verdampfers liegenden weiteren Wärmetauscher, der als Heizkörper ausgeführt ist, zugeführt. Der über den Heizkörper geleitete zweite Teilluftstrom tritt als erwärmter Luftstrom in den Mischraum ein und bildet nach Vermischung mit zumindest einem Teil des ersten, kalten, Teilluftstroms einen Hauptluftstrom.

Ausgehend von dem Mischraum oder der Mischkammer, versorgt der Hauptluftstrom über verschiedene Luftaustrittsöffnungen den Fahrzeuginnenraum. Diese Luftaustrittsöffnungen oder Ausströmer, wie zum Beispiel Defrostluft-, Mittelluft-, Seitenluft- oder Fußraumluftausströmer sind über weitere Steuerklappen luftmengenmäßig unterschiedlich beaufschlagbar.

Durch die, mittels einer Vorrichtung zur Temperierung der Luft einstellbaren, unterschiedlichen Volumenströme aus kalten und erwärmten Teilluftströmen, ergibt sich die Temperatur des Hauptluftstroms bzw. der Luft in der Mischkammer. Eine solche Vorrichtung zur Temperierung eines Hauptluftstroms, der von der Mischkammer in unterschiedliche Bereiche oder auch Zonen des Fahrzeuginnenraums geleitet wird, besteht meist aus einer Temperaturmischklappe oder aus einer Anordnung solcher Mischklappen. Mittels unterschiedlicher Betriebsstellungen einer solchen Mischklappe, ist eine gezielte Beeinflussung oder Steuerung der Beaufschlagung verschiedener Luftströmungskanäle möglich. Insbesondere können Volumenstromverhältnisse zweier unterschiedlich temperierter Luftströme eingestellt werden, um nach dem Zusammenführen oder Mischen dieser beiden oder mehrerer Luftströme, eine definierte Temperatur zu erzielen.

Aus dem Stand der Technik, beispielsweise aus der Patentschrift DE 3038272 C2, sind für solche Temperaturmischklappen so genannte Schmetterlingsklappen bekannt. Diese sind zweiflügelig ausgeführt, dreh- oder verschwenkbar um eine Rotationsachse gelagert und können zwischen zwei Endpositionen bewegt werden. Dabei schließt die Klappe oder Teilbereiche der Klappe in einer ersten Endposition einen Kaltluftkanal vollständig und öffnet gleichzeitig einen Warmluftkanal, der den Luftstrom hin zu einem Heizelement führt. In einer zweiten Endposition tritt der umgekehrte Fall ein. Die Klappe verschließt den Kanal zum Heizelement vollständig und in die Mischkammer gelangt über einen Kaltluftkanal nur kalte Luft. In dazwischengelagerten Stellungen der Klappe ist der Kalt- und Warmluftkanal teilweise geschlossen bzw. geöffnet, so dass sich abhängig von der Klappenstellung eine bestimmte Temperatur in der Mischkammer, in der die beiden Teilströme vereinigt werden, einstellt.

Liegt die Klappe in einer ersten Endposition vor, in der sie beispielsweise den Kaltluftkanal verschließt, wird diese, um eine geringfügige Temperaturabsenkung der Mischluft zu erreichen um einen kleinen Winkel verdreht. An einem Endbereich des den Kaltkanal verschließenden Flügelteils der Mischklappe, wird eine schmale Öffnung zum Durchtritt von kalter Luft in die Mischkammer freigegeben. Nachteilig erweist sich dabei, dass dieser Öffnungsbereich bei einer Schmetterlingsklappe konstruktionsbedingt an dem Ende der Klappe liegt, das auf der, dem Warmluftkanal abgewandten Seite der Klappe liegt. Die gekühlte Luft streicht entlang des Randbereichs des Kaltluftkanals am Klappenende vorbei in die Mischkammer, wodurch nur eine geringe Durchmischung von warmer und kalter Luft erzielt wird. Austrittsöffnungen die diesem Randbereich benachbart sind, werden so überwiegend mit kalter Luft, weiter entfernt liegende Öffnungen fast ausschließlich mit warmer Luft beaufschlagt. Dies führt im Hinblick auf die Luftaustrittsöffnungen aus der Mischkammer zu einer oftmals unerwünschten Temperaturschichtung. Entsprechendes gilt auch für den umgekehrten Fall, bei dem der zunächst vollständig verschlossene Warmluftkanal langsam geöffnet wird.

Eine verbesserte Durchmischung der Teilluftströme erreicht man mit einer Mischklappe vom Schmetterlingstyp durch die Beabstandung der Rotationsachse bzw. der Klappenwand im Bereich der Rotationsachse von einem Randbereich oder Ende einer Trennwand zwischen Kalt-und Warmluftkanal, so dass in den, den Endstellungen zwischengelagerten Stellungen der Mischklappe ein direkter Durchtritt der Kaltluft vom Kaltluftkanal in den Warmluftkanal erfolgen kann und so schon vor Eintritt in die Mischkammer für eine bessere Durchmischung der beiden Teilluftströme gesorgt wird. Nachteilig an dieser Anordnung ist jedoch, dass durch die Ausbildung einer zweiflügeligen Klappe, sich Klappengesamtabmessungen ergeben, die durch die Summe der Öffnungsbreiten des Kalt- und Warmluftkanals bestimmt sind. Eine beispielhafte Ausführung ist in der Offenlegungsschrift DE 3510991 A1 dargestellt.

Eine Klimatisierungseinrichtung mit einer Mischklappe, die diesem Problem ansatzweise Abhilfe schafft, ist aus der Patentschrift US 6231437 B1 bekannt. Die Temperaturmischklappe ist als Trommel- oder zumindest als trommelartige Klappe ausgeführt. Ein wesentliches Merkmal einer trommelartigen Klappe ist es, dass diese eine Wandung aufweist, die kreisförmig und konvex bezüglich der Rotationsachse ausgebildet ist.. Die Gesamtabmessung des Wandbereichs der für das Schließen bzw. Öffnen der Kanäle vorgesehen ist; wird nur mehr durch die maximale Öffnungsbreite des breiteren der beiden Kanäle bestimmt. In der dargestellten Ausführungsform ist die Klappe um eine Rotationsachse drehbar gelagert. Eine kreissegmentartig ausgestaltete Schließwand ist mit einem oder mehreren Durchbrüchen bzw. von der Schließwand zurückspringenden Bereichen versehen um während des Verschwenkens zwischen den Endpositionen "Kalt" und "Warm" einen direkten Durchtritt der Kaltluft vom Kaltluftkanal in den Warmluftkanal zu ermöglichen.

WO 01/08911 zeigt eine Mischklappe mit einem S-förmigen Profil, und offenbart den Oberbegriff des Anspruchs 1.

Durch die konvex gekrümmte Form der Klappe im Strömungsbereich der umgelenkten Kaltluft, ergibt sich eine nachteilige Wirkung auf die Strömungscharakteristik. Bei bestimmten Klappenstellungen liegt die Vorzugsrichtung des eintretenden Kaltluftstroms nahezu senkrecht zur Schließwand. Die auf die Wand auftreffende Kaltluft verwirbelt sich noch vor einem Übertritt in den Warmluftkanal. Die Schließwand, die für eine Umlenkung der Kaltluft sorgen soll, bildet somit ein Strömungshindemis. Durch den daraus resultierenden erhöhten Druckabfall verschlechtern sich auch die akustischen Eigenschaften der Klimatisierungseinrichtung.

Ausgehend von diesem Stand der Technik ist es daher Aufgabe der Erfindung, eine verbesserte Klimatisierungseinrichtung bereitzustellen, die eine Temperaturmischklappe mit einem optimal auf die Luftströmung, insbesondere auf die Funktion der Luftumlenkung, abgestimmten Profil enthält.

Diese Aufgabe wird gelöst durch eine Klimatisierungseinrichtung mit den Merkmalen des Anspruchs 1. Vorteilhafte Ausgestaltungen sind Gegenstand der Unteransprüche.

Erfindungsgemäß weist eine Klimatisierungseinrichtung zum Erzeugen eines Luftstromes ein Gebläse auf. Stromabwärts dieses Gebläses ist ein Verdampfer angeordnet. Nach dem Verdampfer wird der Luftstrom mittels einer Mischklappe auf einen ersten Strömungskanal und einen zweiten Strömungskanal aufgeteilt, wodurch ein erster und ein zweiter Teilluftstrom erzeugbar ist. Der erste Strömungskanal mündet in eine Mischkammer ein, während in dem zweiten Strömungskanal ein Wärmetauscher zum Erwärmen des zweiten Teilluftstroms angeordnet ist und erst stromabwärts des Wärmetauschers in die Mischkammer mündet.

In der Mischkammer ist aus dem ersten und zweiten Teilluftstrom ein Misch-oder Hauptluftstrom erzeugbar, wobei von der Mischkammer Luftaustrittskanäle in unterschiedliche-Bereiche oder Zonen des Fahrzeuginnenraums führen. Den Luftaustrittskanälen wie beispielsweise, Defrost-, Mittel-, Seiten-oder Fußraumluftkanälen sind vorzugsweise zusätzliche Schaltklappen zugeordnet, welche den Luftaustrittsstrom von der Mischkammer durch die zugeordneten Luftaustrittskanäle steuern.

Die erfindungsgemäße Mischklappe zur Aufteilung des Luftstromes besteht aus mindestens drei Abschnitten, die vorzugsweise einstückig miteinander verbunden sind, so dass sich eine zusammenhängende durchgehende Kontur ergibt. Diese Kontur bildet den Wandbereich der Klappe. Die Mischklappe weist eine Rotationsachse auf, die außerhalb dieses Wandbereichs, vorzugsweise im Bereich der Mischkammer, liegt. Von den Abschnitten der Klappe, die den Wandbereich bilden, erstrecken sich zwei Abschnitte in radialer Richtung zur Rotationsachse oder bilden mit dieser radialen Richtung einen spitzen Winkel. Mindestens ein weiterer Abschnitt liegt zwischen die-' sen beiden Abschnitten und ist bezüglich der Rotationsachse konkav gekrümmt. Die Mischklappe ist um ihre Rotationsachse zwischen zwei Endpositionen dreh- bzw. verschwenkbar. In einer ersten Endposition verschließt sie einen ersten Strömungskanal, beispielsweise einen Kaltluftkanal, vollständig und öffnet einen zweiten Strömungskanal, beispielsweise einen Warmluftkanal. In einer zweiten Endposition öffnet die Klappe den ersten Strömungskanal (Kaltluftkanal) und verschließt den zweiten Strömungskanal (Warmluftkanal) vollständig. In den diesen Endpositionen zwischengelaüerten Stellungen ist ein direkter Durchtritt von Kaltluft in den Warmluftkanal durch die konkave Ausführung eines Abschnitts des Wandbereichs der Klappe möglich.

Der Wandbereich der Mischklappe ist konstruktiv so gestaltet, dass der konkave Abschnitt den wesentlichen Teil bildet, wobei die an seinen Enden anschließenden radialen oder spitzwinkelig zur radialen Richtung ausgeführten Abschnitte, sich auf den Randbereich der Klappe erstrecken. Erfindungsgemäß ist durch die konkave Krümmung oder Wölbung des Wandbereichs, in den, den Endpositionen zwischengelagerten Stellungen der Klappe, nicht nur ein direkter Durchtritt der Kaltluft in den Warmluftkanal möglich, sondern es erfolgt eine sanfte Umlenkung eines Teils des Kaltluftstroms unter größtmöglicher Vermeidung von Verwirbelungen vor dem Eintritt in den Warmluftkanal. Die umgelenkte Strömung kann durch die weitgehend konkave Form der Klappe, so geleitet werden, dass sich im Mischbereich im Warmluftkanal eine gegenläufige Strömungsrichtung zu der des Warmluftstromes ergibt und so, vor der Einmündung des Warmluftkanals in die Mischkammer eine sehr effiziente Durchmischung der Luftströmungen stattfindet.

Um die Umlenkung strömungstechnisch und in ihren akustischen Eigenschaften zu optimieren, sind die unterschiedlichen Abschnitte des Wandbereichs so ausgeführt, dass sie stetig ineinander übergehen. Abhängig vom Winkel unter dem der Kalt- und Warmluftkanal zueinander angeordnet sind bzw. von der Einbaulage des Heizkörpers, kann eine strömungsgünstige Anpassung des konkaven Teils des Wandbereichs, beispielsweise in Form eines asymmetrischen Profils, erfolgen.

Es entspricht einer weiteren vorteilhaften Ausgestaltung der Klimatisierungseinrichtung, dass die Mischklappe über die gesamte Länge im Querschnitt eine gleich bleibende Kontur aufweist.

Soll eine gute Durchmischung des kalten und warmen Luftstroms nur bereichsweise erfolgen und bereichsweise eine Temperaturschichtung erzielt werden, so kann die Mischklappe lateral getrennte unterschiedliche Wandbereiche aufweisen, wobei der Wandbereich der Klappe in zumindest einem dieser Bereiche, die erfindungsgemäße, bezüglich der Rotationsachse konkav gekrümmte Form zeigt.

Um die Mischklappe in einer ihrer Endpositionsstellungen festzulegen, sind bevorzugt ein oder beide Enden des Wandbereichs in Form von Anschlägen ausgeführt. Diese Anschlagsflächen können sich an Stege oder entsprechend gefertigte vor- oder rückspringende Bereiche der Gehäusewand anlegen und in einer Endposition für eine Abdichtung eines Strömungskanals sorgen. Vorzugsweise sind die Anschlagsflächen mit einem dichtenden Material, beispielsweise einer Schaumumspritzung, beaufschlagt.

Der bezüglich der Rotationsachse konkave Abschnitt des Wandbereichs der Mischklappe kann kreis bzw. kreissegmentförmig ausgeführt sein. Weitere Möglichkeiten für das Profil der Klappe sind elliptische, parabolische, hyperbolische bzw. beliebige stetig konkav gekrümmte Formen, wobei sich der konkave Abschnitt auch aus Kombinationen dieser genannten Profile zusammensetzen kann. Im Grenzfall kann ein konkav gekrümmter Abschnitt der Mischklappe auch geradlinig ausgeführt werden, womit sich eine erfindungsgemäße Klimatisierungseinrichtung ebenfalls realisieren lässt. Ist der konkave Abschnitt der Klappe in mehrere Unterabschnitte aufgeteilt, so können Teilstücke auch gerade verlaufend sein, solange die Gesamtstruktur eine im Wesentlichen konkave Struktur beibehält.

Für die Anlenkung der Mischklappe kommen vorzugsweise randständig an der Rotationsachse angeordnete Schwenkarme zum Einsatz, die sich ausgehend von der Rotationsachse kreissegmentförmig aufweiten. Zur Versteifung können auch ein oder mehrere Schwenkarme entlang der Längsachse der Klappe angeordnet sein.

Im Übrigen wird die Erfindung nachfolgend an Hand der in den Zeichnungen dargestellten Ausführungsbeispielen näher erläutert, dabei zeigt:
- Fig.1: eine Querschnittsdarstellung durch eine erfindungsgemäße Klimatisierungseinrichtung mit einer Temperaturmischklappe, die den Kaltluftkanal vollständig verschließt - Position "Warm"; und
- Fig. 2: ein Querschnittsdarstellung durch eine erfindungsgemäße Klimatisierungseinrichtung mit einer Temperaturmischklappe, die den Warmluftkanal vollständig verschließt - Position _{"}Kalt" ; und
- Fig.3: eine Querschnittsdarstellung durch eine erfindungsgemäße Klimatisierungseinrichtung mit einer Temperaturmischklappe, die in einer zwischengelagerten Stellung den Frischluft- und den Warmluftkanal teilweise verschließt; und
- Fig. 4a - 4d: Querschnittsdarstellungen beispielhafter Ausführungsformen einer Temperaturmischklappe; und
- Fig.4e: Querschnittsdarstellung einer Temperaturmischklappe, welche nicht Teil der Erfindung ist; und
- Fig. 5: in schematischer perspektivischer Darstellung eine Temperaturmischklappe mit Schwenkarmen und Schwenkachse; und
- Fig. 6: eine perspektivische Ansicht eines Luftführungsgehäuses, welches nicht Teil der Erfindung ist; und
- Fig. 7: das bereichsweise aufgeschnittene Luftführungsgehäuse, welches nicht Teil der Erfindung ist von Fig. 6 aus der gleichen Perspektive; und
- Fig. 8: einen Schnitt durch das Luftführungsgehäuse in der Mitte der Klappe, welche nicht Teil der Erfindung ist, in der Klappenstellung 100% warm; und
- Fig. 9: einen Schnitt durch das Luftführungsgehäuse im seitlichen Bereich der Klappe, welche nicht Teil der Erfindung ist, in der Klappenstellung von Fig. 8; und
- Fig. 10: einen Schnitt durch das Luftführungsgehäuse in der Mitte der Klappe, welche nicht Teil der Erfindung ist, in der Klappenstellung 75% warm; und
- Fig. 11: einen Schnitt durch das Luftführungsgehäuse im seitlichen Bereich der Klappe in der Klappenstellung von Fig. 10; und
- Fig. 12: einen Schnitt durch das Luftführungsgehäuse in der Mitte der Klappe, welche nicht Teil der Erfindung ist,in der Klappenstellung 50% warm; und
- Fig. 13: einen Schnitt durch das Luftführungsgehäuse im seitlichen Bereich der Klappe, welche nicht Teil der Erfindung ist, in der Klappenstellung von Fig. 12; und
- Fig. 14: einen Schnitt durch das Luftführungsgehäuse in der Mitte der Klappe, welche nicht Teil der Erfindung ist, in der Klappenstellung 0% warm; und
- Fig. 15: einen Schnitt durch das Luftführungsgehäuse im seitlichen Bereich der Klappe, welche nicht Teil der Erfindung ist, in der Klappenstellung von Fig. 14; und
- Fig. 16: eine perspektivische Ansicht der Klappe, welche nicht Teil der Erfindung ist,; und
- Fig. 17: die Ansicht von Fig. 16 mit Darstellung der Schnittlinien der Figuren 8 bis 15; und
- Fig. 18: die Klappe ,welche nicht Teil der Erfindung ist, aus einer anderen Perspektive; und
- Fig. 19: einen Schnitt quer durch die Klappe ,welche nicht Teil der Erfindung ist,; und
- Fig. 20a, 20b: Querschnittsdarstellunge durch eine Klimatisierungseinrichtun, welche nicht Teil der Erfindung ist, im Bereich neben einem Bypasskanal bzw. im Bereich des Bypasskanals bei durch Steuerklappen verschlossenen ersten Strömungskanal; und
- Fig. 21a, 21b: Querschnittsdarstellungen durch eine Klimatisierungseinrichtung, welche nicht Teil der Erfindung ist, im Bereich neben einem Bypasskanal bzw. im Bereich des Bypasskanals bei durch Steuerklappen teilgeöffneten ersten Strömungskanal; und
- Fig. 22a, 22b: Querschnittsdarstellungen durch eine Klimatisierungseinrichtung, welche nicht Teil der Erfindung ist, im Bereich neben einem Bypasskanal bzw. im Bereich des Bypasskanals bei durch Steuerklappen verschlossenen zweiten Strömungskanal; und
- Fig. 23: in schematischer perspektivischer Darstellung, welche nicht Teil der Erfindung ist, ein Klappenelement, das sowohl Mischklappe als auch Steuerklappe umfasst, sowie die zugehörigen Bypasskanäle.

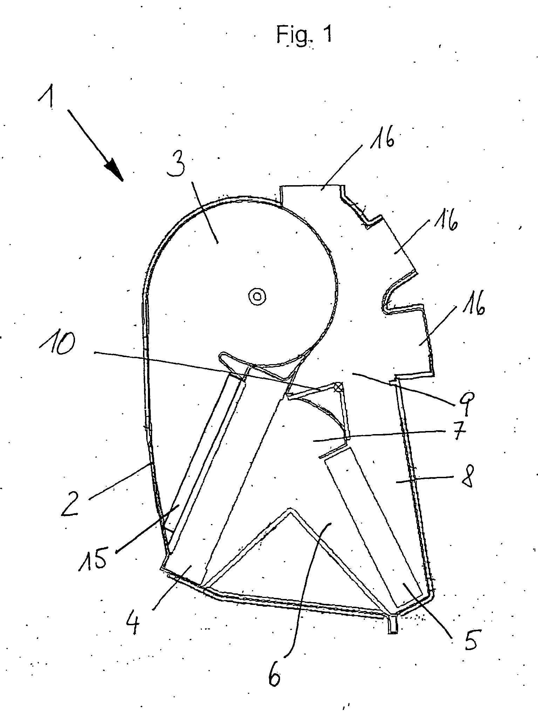

Die Figuren 1, 2 und 3 zeigen eine erfindungsgemäße Klimatisierungseinrichtung 1 in Querschnittsdarstellung. Innerhalb des Gebläsegehäuses 3 ist ein nicht dargestelltes Gebläse, vorzugsweise ein Radiallüfter, angeordnet, der in der Senkrechten zur Schnittebene Luft ansaugt. Die vom Radiallüfter geförderte Luft durchströmt zunächst einen Luftfilter 15 und dann den Verdampfer 4, in dem die Luft abgekühlt wird.

Stromabwärts des Verdampfers 4 schließen sich ein Strömungskanal 7, der als Kaltluftkanal bezeichnet wird, und ein weiterer Strömungskanal 6, der als Heizkörper-Eintrittskanal bezeichnet wird, an. Die in den Strömungskanal 6 strömende Luft passiert stromabwärts des Verdampfers 4 einen Wärmetauscher 5, der als Heizkörper ausgeführt ist. Nicht dargestellt ist ein optionales Zusatzheizgerät wie beispielsweise ein PTC-Heizgerät. Über den Strömungskanal 8, der als Warmluftkanal bezeichnet wird, und stromabwärts des Heizkörpers gelegen ist, gelangt erwärmte Luft in die Mischkammer 9 in die auch der Kaltluftkanal 7 mündet.

Die Figuren 1,2 und 3 zeigen die Mischklappe 10 in einer ersten Endposition, in einer zweiten Endposition und in einer Zwischenstellung. Die Einstellung der Mischklappe 10 bestimmt das Verhältnis zwischen dem geöffneten Strömungsquerschnitt von einem ersten Strömungskanal 7 zu einem zweiten Strömungskanal 8 und somit den Anteil des vom Verdampfer 4 kommenden Volumenstromes, der nicht über den Wärmetauscher 5 geführt wird. Damit wird die sich einstellende Temperatur, der sich ergebenden Mischluft in der Mischkammer 9 gesteuert bzw. geregelt.

Von der Mischkammer 9 abgehend befinden sich mehrere Luftaustrittskanäle 16, wobei jedem dieser Kanäle eine oder mehrere Schaltklappen (in den Figuren nicht dargestellt) zugeordnet sind, durch welche die Größe des Luft-stroms in den entsprechenden Luftaustrittskanälen 16 steuer- oder regelbar ist.

In Fig.1 ist die Mischklappe 10 in einer ersten Endposition dargestellt, wobei sie den Durchtritt des Luftstroms durch den Kaltluftkanal 7 verschließt. Der gesamte aus dem Verdampfer 4 austretende Luftstrom wird über den Strömungskanal 6 zum Wärmetauscher 5 und weiter über den Warmluftkanal 8 in die Mischkammer 9 geleitet. Ein radialer Abschnitt 13 der Mischklappe 10 liegt an einem vorspringenden Bereich des Gehäuses 2, benachbart dem oberen Ende des Verdampfers 4, dichtend an. Ein zweiter radialer Abschnitt 13 der Mischklappe 10 liegt an einem Steg des Gehäuses 2 im Bereich des oberen Endes des Wärmetauschers 5, an. Eine entsprechende Beschichtung der Enden der radialen Abschnitte 13, sorgt für einen weitestgehend luftdichten Verschluss des Kaltluftkanals 7.

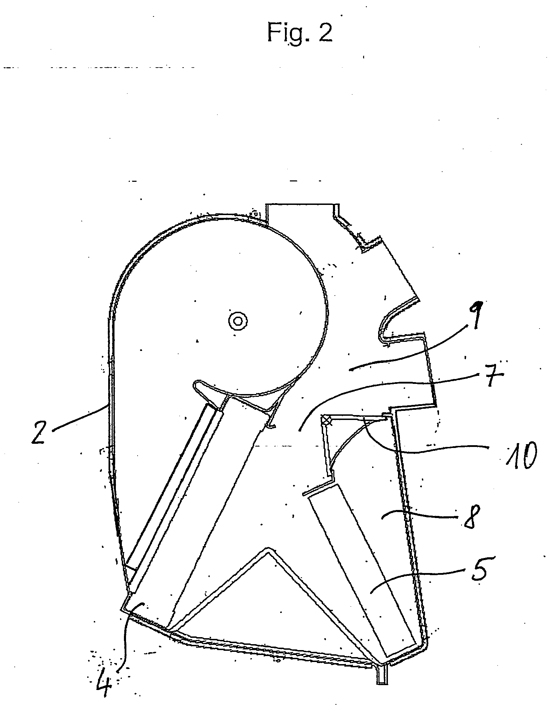

Fig.2 zeigt die Mischklappe 10 in einer zweiten Endposition, wobei sie den Durchtritt des Luftstroms durch den Warmluftkanal 8 verschließt. Der gesamte aus dem Verdampfer 4 austretende Luftstrom wird über den Kaltluftkanal 7 in die Mischkammer 9 geleitet. Ein radialer Abschnitt 13 der Mischklappe-10 liegt an einem vorspringenden Bereich des Gehäuses 2, benachbart dem oberen Ende des Wärmetauschers 5, dichtend an. Ein zweiter radialer Abschnitt 13 der Mischklappe 10 liegt an einem Steg des Gehäuses 2 am rechten Rand des Warmluftkanals 8, dichtend an.

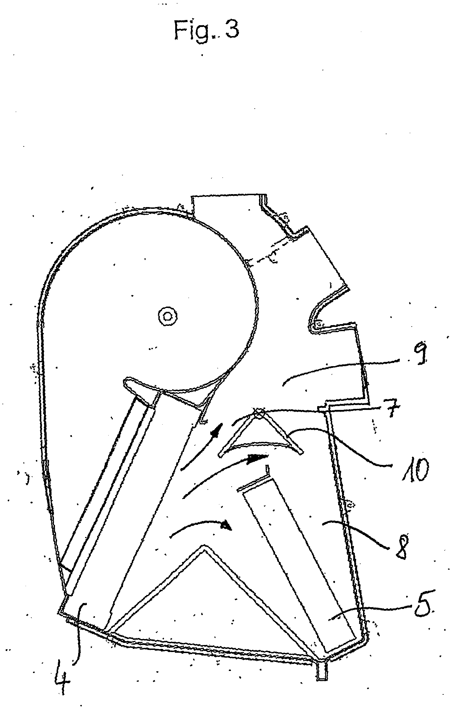

In Fig. 3 ist die Mischklappe 10 in einer Zwischenstellung dargestellt. Weder der Kaltluftkanal 7 noch der Warmluftkanal 8 sind vollständig verschlossen oder geöffnet. Anhand der eingezeichneten Pfeile ist der Strömungsweg des aus dem Verdampfer 4 kommenden Luftstroms ersichtlich. Der Kaltluftstrom teilt sich dabei auf in einen ersten Teilstrom, der direkt in die Mischkammer 9 gelangt und einen zweiten Teilstrom, der über den Wandbereich der Mischklappe 10 in den Warmluftkanal 8 umgelenkt wird, wo er sich mit dem Teilluftstrom, der den Wärmetauscher 5 passiert hat, durchmischt. Durch die strömungsgünstig ausgeführte Form der radialen Abschnitte 13 und insbesondere des konkaven Abschnitts 12, ist wie aus Fig. 3 ersichtlich, eine sanfte Umlenkung des kalten Teilstromes möglich.

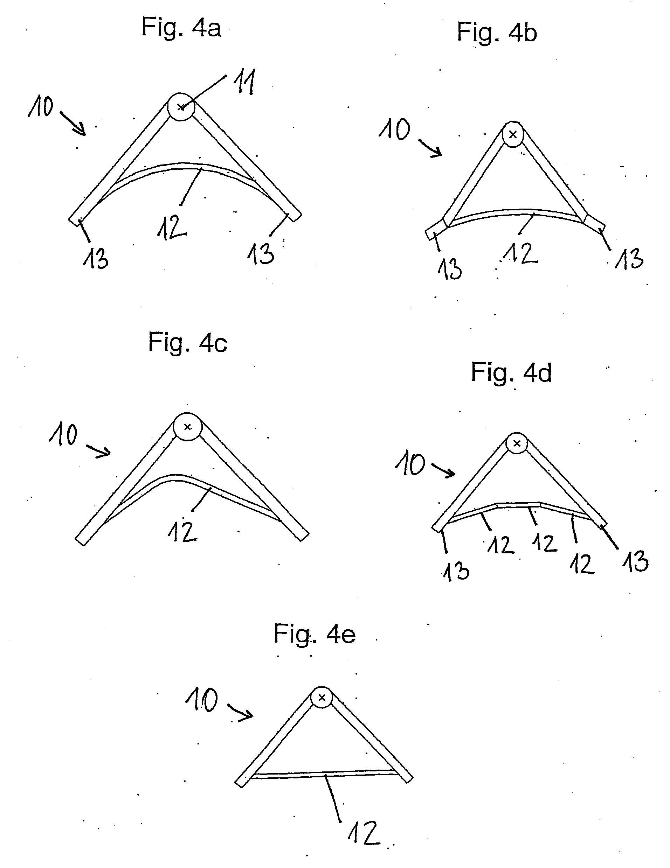

In den Figuren 4a bis 4e sind beispielhafte Ausführungsformen einer Mischklappe 10 in Querschnittsansichten dargestellt.

Fig. 4a zeigt den aus den Abschnitten 13 und 12 zusammengesetzten Wandbereich der Mischklappe 10. Die Endabschnitte 13 verlaufen in radialer Richtung ausgehend von der Rotationsachse 11. Der mittlere Abschnitt 12 weist bezüglich der Rotationsachse 11 eine konkave Krümmung auf. Zur Verbesserung der Strömungseigenschaften der Mischklappe 10 gehen die radialen Abschnitte 13 stetig in den konkaven Abschnitt 12 über. Die radialen Abschnitte 13 dienen als Anschlag am Gehäuse um die Mischklappe 10 in ihren Endpositionen festzulegen. Um in den Endpositionen für eine Abdichtung der Strömungskanäle 7 und 8 zu sorgen, sind die Anschlagsflächen der Mischklappe 10 mit einem dichtenden Material, beispielsweise einer Schaumumspritzung, beaufschlagt.

In Figur 4b sind die Abschnitte 13 zwar gerade, weisen allerdings eine geringe Abweichung von der radialen Richtung auf. Dies ist insbesondere für eine Mischklappe 10 vorteilhaft, die einen konkaven Abschnitt 12 mit einem wenig gekrümmten Profil enthält, um an den Anschlussbereichen zwischen den Abschnitten 13 und 12 die Anforderung der Stetigkeit zu erfüllen.

Um während der Öffnungs- bzw. Schließbewegung der Mischklappe 10 eine gezielte, auf die jeweiligen Anforderungen des gewünschten Mischungsverhältnisses aus warmer und kalter Luft angepasste Veränderung der Querschnittsfläche für den direkten Durchtritt der kalten Luftströmung in den Warmluftkanal 8 zu erreichen, kann der konkave Wandabschnitt 12, wie in Figur 4c gezeigt, auch einen asymmetrischen Verlauf haben.

Eine Annäherung an einen weitestgehend konkaven Krümmungsverlauf wird auch durch eine Aneinanderreihung gerader Abschnitte 12, wie beispielhaft in Fig. 4d illustriert, erreicht. Im Grenzfall ergibt sich hierbei die Form einer Dreiecksklappe mit einem geraden Abschnitt 12, wie in Fig. 4e dargestellt.

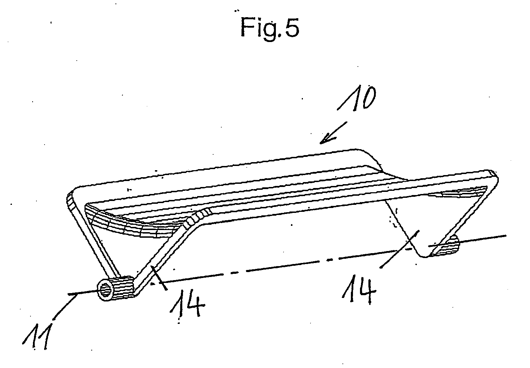

Die Fig. 5 zeigt in perspektivischer Darstellung eine Mischklappe 10 mit seitlich an den Stirnseiten der Klappe 10 angebrachten Schwenkarmen 14, wobei die Schwenkarme 14 sich radial aufweiten und in Form von Stegen ausgeführt sind, die sich von der Rotationsachse 11 der Mischklappe 10 hin zum. Wandbereich erstrecken.

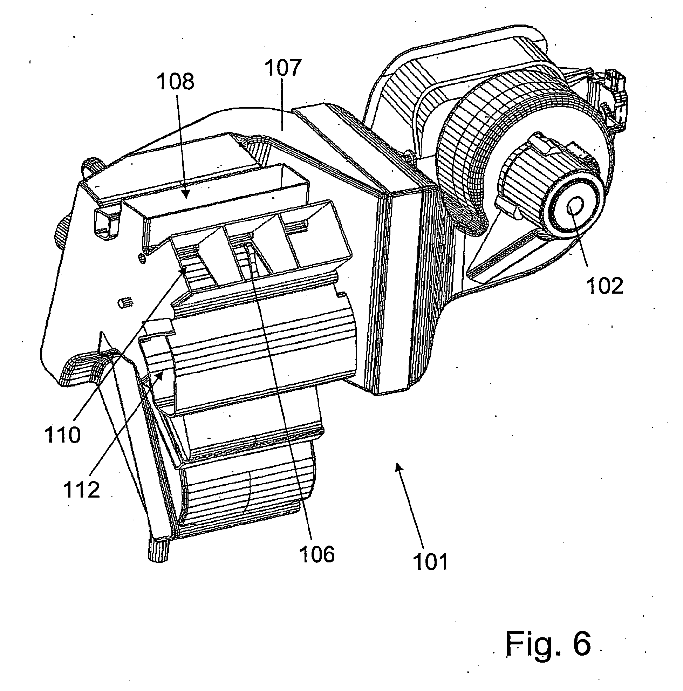

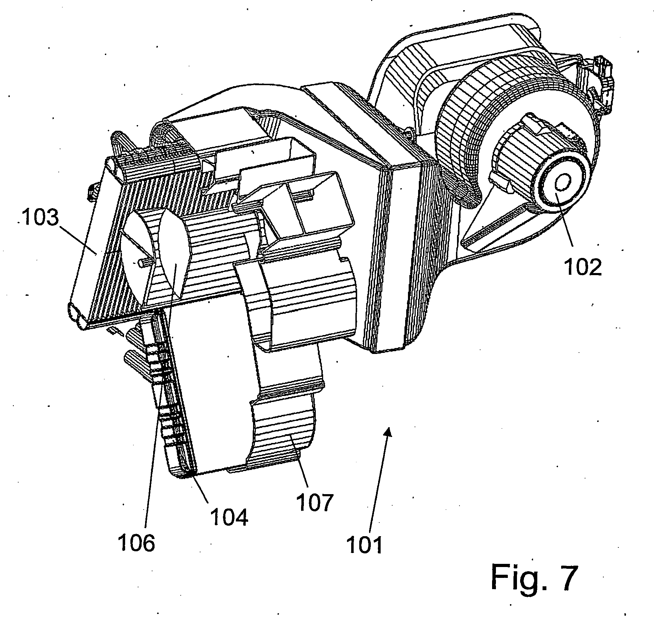

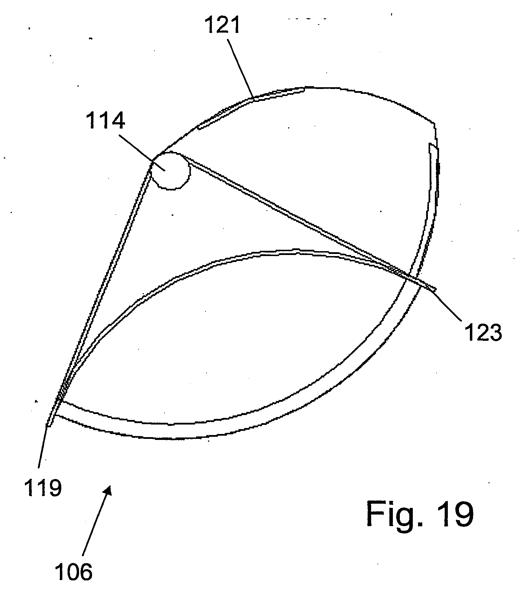

Eine Kraftfahrzeugkljmaanlage 101 mit einer Mischklappe 106, die nur in einem Teilbereich einen bezüglich der Rotationsachse konkaven Wandbereich 117 aufweist wird in den Figuren 6 bis 19 beschrieben.

Diese Kraftfahrzeug-Klimaanlage 101 mit einem Gebläse 102, einem Verdampfer 103, einem Heizer 104 und einem Zuheizer 105, die in einem mehrteilig ausgebildeten Luftführungsgehäuse 107 angeordnet sind, weist zur bedarfsgerechten Temperierung und Erzeugung einer geschichteten Luftströmung eine Misch-Klappe 106 auf,

Die temperierte Luft kann über mittels Klappen geregelter Luftkanäle verschiedenen Bereichen des Fahrzeuginnenraums zugeführt werden. So ist ein vom Luftführungsgehäuse 107 abzweigender Luftkanal 108 vorgesehen, welcher dem Entfrosten der Windschutzscheibe dient. Die durch den Defrost-Luftkanal 108 geführte Luftmenge wird mittels einer Defrost-Klappe 109 geregelt. Ein weiterer Luftkanal 110 führt zu den Seiten- und Mitteldüsen und ist mittels einer Klappe 111 regelbar. Ferner ist ein Fußraum-Luftkanal 112 vorgesehen, der mit einer Fußraum-Klappe 113 regelbar ist.

Wie aus Fig. 6 ersichtlich ist, ist der Belüftungs-Luftkanal 110 dreiteilig ausgebildet, wobei vorliegend die drei Teilkanäle jeweils etwa den gleichen Querschnitt aufweisen. Sie dienen in Zusammenwirkung mit der Klappe 106 der Luftschichtung, zwischen Mittel- und Seitendüse.

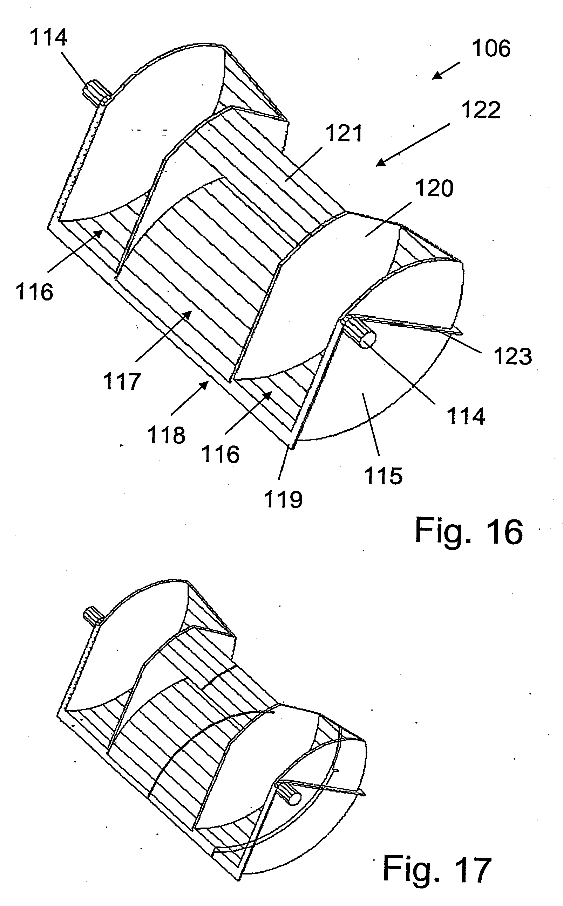

Um diese Luftschichtung durch eine einfache Klappe zu ermöglichen, die Trennwände oder speziell ausgebildete Kaltluft-Kanäle erübrigt und somit einen etwas geringeren Bauraumbedarf hat, ist die gemäß dem vorliegenden Ausführungsbeispiel dreiteilige Klappe 106 vorgesehen.. Diese weist in ihrer Schwenkachse zwei Zapfen 114 auf, die an den Stirnflächen 115 angeordnet sind. Die Klappe 106 ist spiegelsymmetrisch bezüglich einer senkrecht zur Schwenkachse in der Mitte der Klappe 106 verlaufenden Ebene ausgebildet, wobei die Schnittlinien dieser Ebene mit der Klappe 106 in Fig. 17 dargestellt sind.

Die Klappe 106 weist auf Grund ihrer Symmetrie zwei äußere Bereiche 116 und einen mittleren Bereich 117 auf. Sie ist in ihren äußeren Bereichen 116 trommelklappenartig ausgebildet, d.h. die Klappe 106 hat die Gestalt eines Teils eines Hohlzylinders. Auf einer sich in Längsrichtung der Klappe 106 erstreckenden Seite 118 enden die. Bereiche 116 und 117 auf gleicher Höhe, wobei zur besseren Abdichtung ein sich radial nach außen erstreckender Rand 119 vorgesehen ist, der sich auch über die Stirnflächen 115 bis zu den Zapfen 114 erstreckt. Der Strömungsquerschnitt der beiden äußeren Bereiche 116 zusammen entspricht gemäß dem vorliegenden Ausführungsbeispiel etwa dem Strömungsquerschnitt des mittleren Bereichs 117.

Der mittlere Bereich 117 ist in Richtung der Schwenkachse gewölbt ausgebildet und von den seitlichen Bereichen 116 durch Wände 120 getrennt. Am schwenkachsenseitigen Ende der Wände 120 sind dieselben mittels einer Überbrückung 121 verbunden, wobei diese leicht entsprechend dem mittleren Bereich 117 gewölbt ist. Diese Überbrückung 121 dient zum Einen als eine Art Spoiler mit einer Luftleitfunktion und zum Anderen der Erhöhung der Stabilität der Klappe 106.

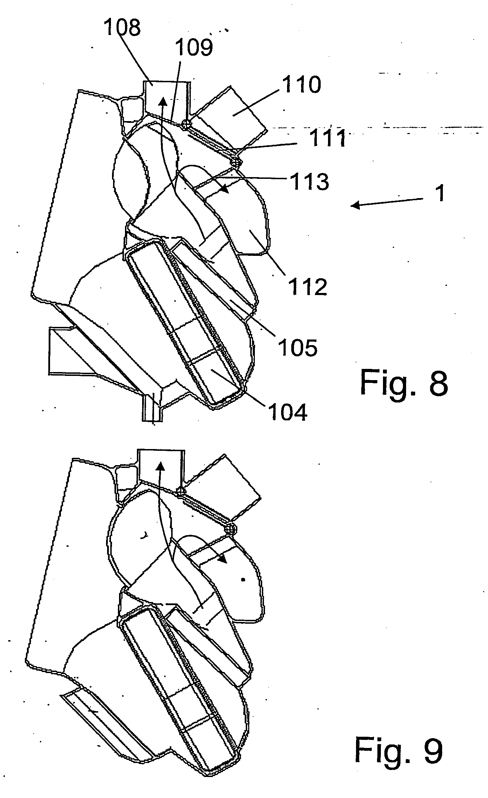

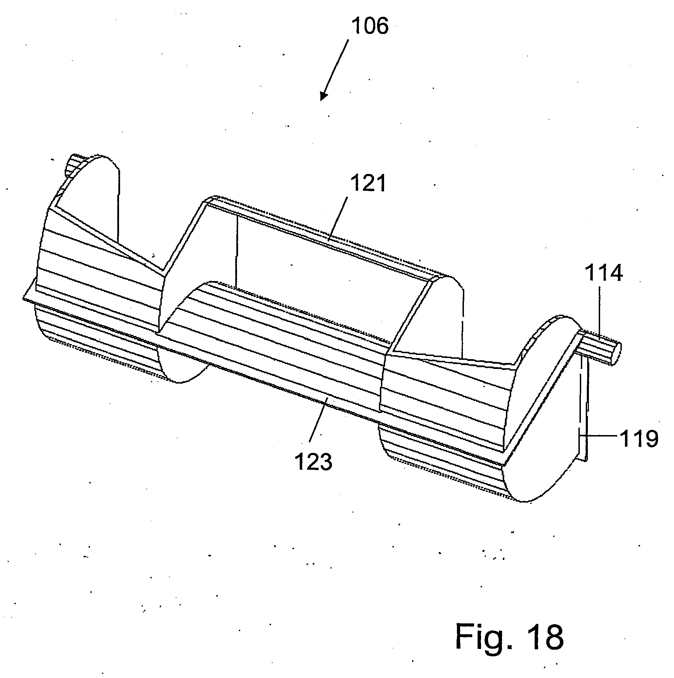

Auf der, der Seite 118 gegenüberliegenden Seite 122 der Klappe 106 enden die Bereiche 116 und 117 in unterschiedlichen Höhen, wie insbesondere aus Fig. 18 ersichtlich ist. Zur Verbesserung des Öffnungsverhaltens sind die äußeren Bereiche 116 abgeschrägt ausgebildet, d.h. sie verlaufen insbesondere nicht parallel zur Schwenkachse. Der mittlere Bereich 117 endet parallel zur Schwenkachse, wobei wiederum ein sich nach außen erstreckender Rand 123 vorgesehen ist, welcher sich auch über die Außenseite der äußeren Bereiche 116, die Stirnflächen 115 bis zu den Zapfen 114 und somit zum Rand 119 erstreckt. Im Folgenden wird die Funktion der Klappe 106 unter Bezugnahme auf die Figuren 8 bis 15 näher erläutert.

Die Figuren 8 und 9 zeigen die Stellung 100% warm, d.h. die Klappe 106 verschließt der direkt vom Verdampfer 103 kommenden Kaltluft den Weg mit allen Bereichen 116 und 117. Hierbei liegt die Klappe 106 mit ihrem Rand 119 am entsprechend ausgebildeten Luftführungsgehäuse 107 an, so dass keine Kaltluft zu den Luftkanälen 108 und 112 gelangen kann. Der Strömungsweg der vom Heizer 104 und Zuheizer 105 kommenden Warmluft ist für den Fall geöffneter Defrost- und Fußraum-Klappen 109 und 113 mittels durchgezogener Pfeile dargestellt. Die Klappe 111 für die Luftzufuhr zu den Seiten- und Mitteldüsen ist gemäß der Darstellung verschlossen.

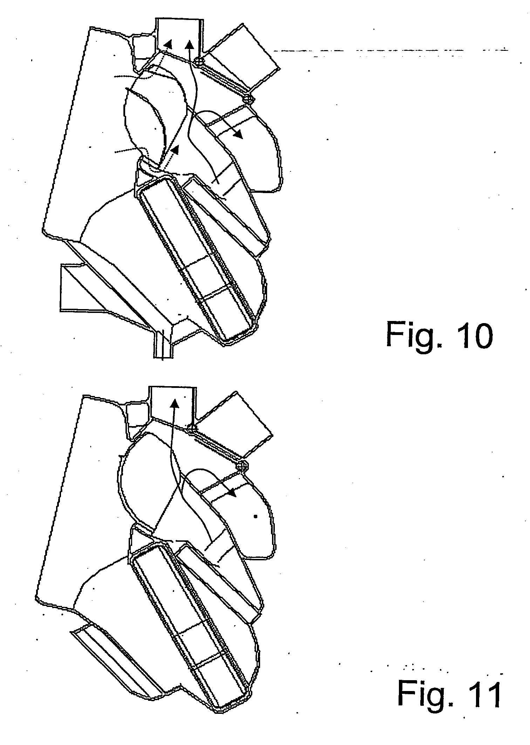

Wird die Klappe 106, wie in den Figuren 10 und 11 dargestellt, langsam in ihre andere Endstellung bewegt, so wird im mittleren Bereich 117 der Klappe 106 beidseitig ein Kaltluftdurchlass freigegeben, durch den kalte Luft insbesondere in den Defrost-Luftkanal 108 strömt. Dadurch wird erreicht, dass die Temperatur der Luft, die in den Fußraum geleitet wird, höher ist als die Temperatur der Luft, die in den Defrost-Luftkanal 108 gelangt. Auf Grund der breiter ausgebildeten äußeren Bereiche 116 ist der Kaltluftdurchlass in diesen Bereichen noch verschlossen. Der Strömungsweg der Kaltluft ist in der Zeichnung mittels gepunkteter Pfeile dargestellt.

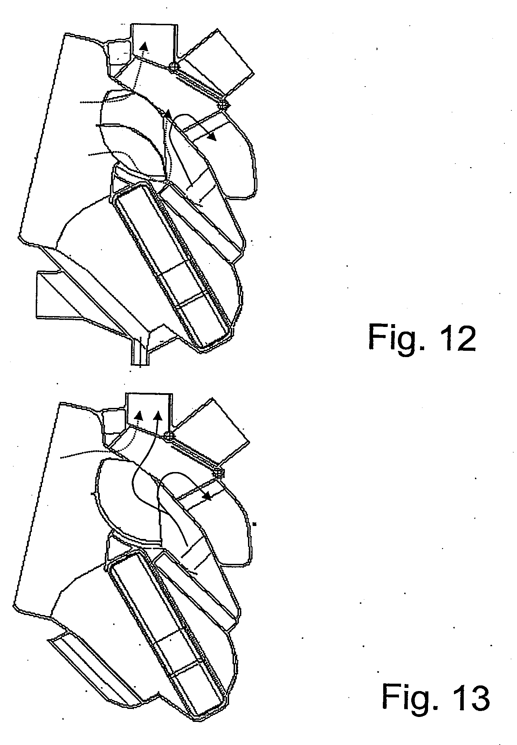

Bei einer Weiterbewegung der Klappe 106, wie in den Figuren 12 und 13 dargestellt, wird der Kaltluftdurchlass im mittleren Bereich 117 immer weiter geöffnet, so dass die Temperatur weiter absinkt. In den äußeren Bereichen 116 beginnen sich die Kaltluftdurchlässe langsam auf Grund der Schräge zu öffnen, und Kaltluft gelangt in den äußeren Bereichen 116 insbesondere zum Defrost-Luftkanal 108. Auch hier erreicht man eine für den Fahrgast als angenehm empfundene Temperaturschichtung, indem die Temperatur der Luft, die in den Fußraum geleitet wird, höher ist als die Temperatur der Luft, die in den Defrost-Luftkanal 108 gelangt.

Bei Klappenstellungen, die eine Öffnung oder zumindest teilweise Öffnung des Luftkanals 110 bewirken (in den Figuren 8 bis 13 nicht dargestellt) erhält man eine Temperaturschichtung zwischen Mittel- und Seitenluftkanälen. Durch die beschriebene Form der. Klappe 106, ist die Temperatur der Luft die der oder den Mitteldüsen zugeführt wird, niedriger als die Lufttemperatur in den Seitendüsen, was ebenfalls zu einer Komfortsteigerung im Innenraum beiträgt, da die Wärmeabstrahlung über die Seitenscheiben größer ist, als in der Mitte des Fahrgastraums und es durch die beschriebene Temperaturschichtung zu einer Vergleichmäßigung; zumindest des vom Fahrgast empfundenen, Temperaturprofils kommt.

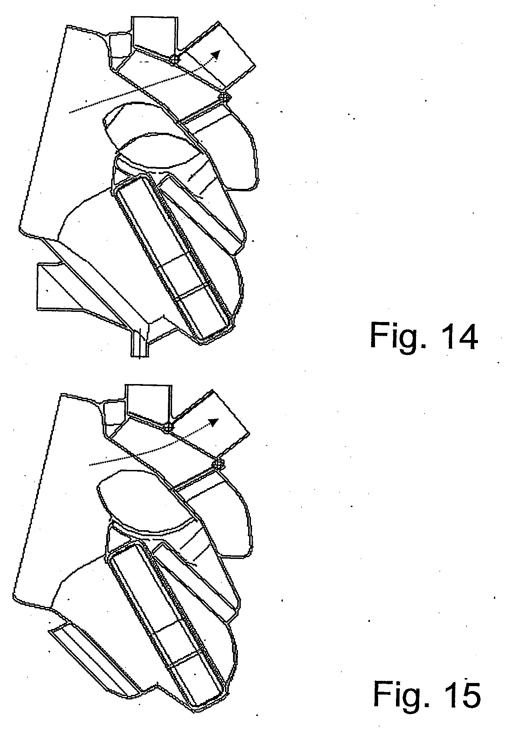

Ist der Warmluftdurchlass, wie in den Figuren 14 und 15, vollständig geschlossen, so gelangt in sämtlichen Bereichen 116 und 117 Kaltluft zu den entsprechenden Luftkanälen 108, 110 und 112. Im dargestellten Ausführungsbeispiel sind dabei sowohl der Defrost-Luftkanal 109 als auch der Luftkanal 112 in den Fußraum geschlossen und es gelangt nur gleichmäßig kalte Luft in die Kanäle 110 für Seiten- und Mitteldüsen.

Somit kann eine Schichtung der Luft ermöglicht werden, wobei in sämtlichen Misch- oder Zwischenstellungen der Klappe 6, die der Windschutzscheibe zugeführte Luft kälter als die dem Fußraum zugeführte Luft ist, bzw. die den Mitteldüsen zugeführte Luft kälter als die den Seitendüsen zugeführte Luft ist.

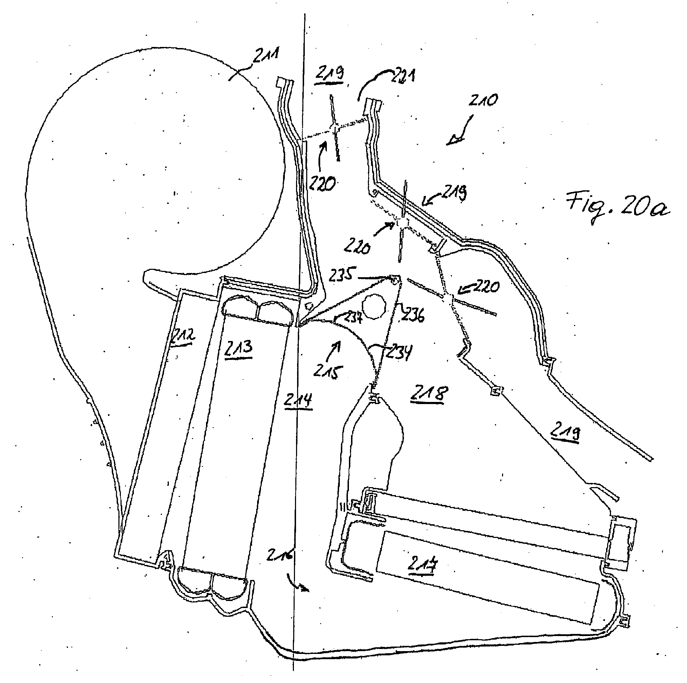

Um eine entsprechend gewünschte Temperaturschichtung zu erreichen, ist in einem weiteren Ausführungsbeispiel eine dreigeteilte Mischklappe vorgesehen, bei der die beiden äußeren Bereiche konvex gekrümmt sind und in einem Bypasskanal geführt werden. Der dazwischen liegende Bereich weist eine, bezüglich der Rotationsachse, konkave Krümmung des Wandbereichs auf. Dieses Ausführungsbeispiel wird anhand der Figuren 20 bis 23 im Folgenden näher erläutert. Die beiden äußeren Bereiche der Klappe werden im Folgenden Mischklappe und der innere Bereich Schaltklappe genannt.

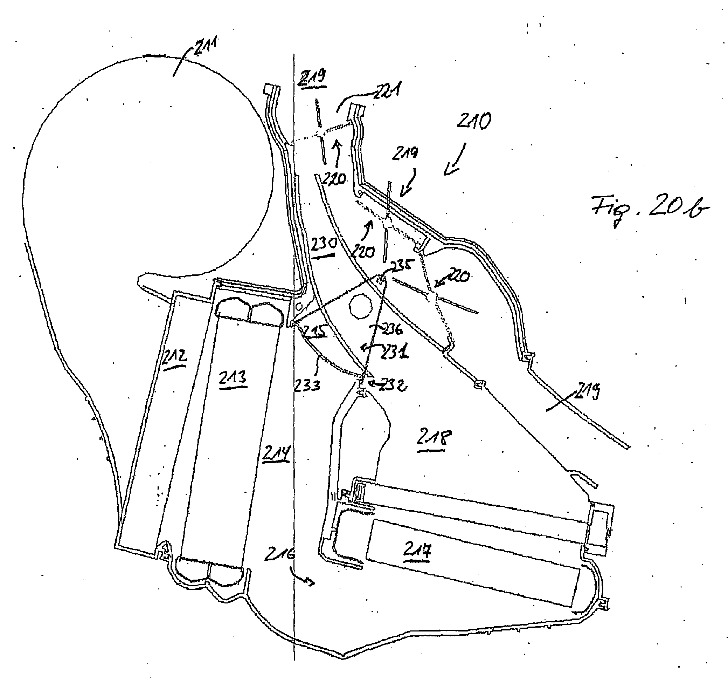

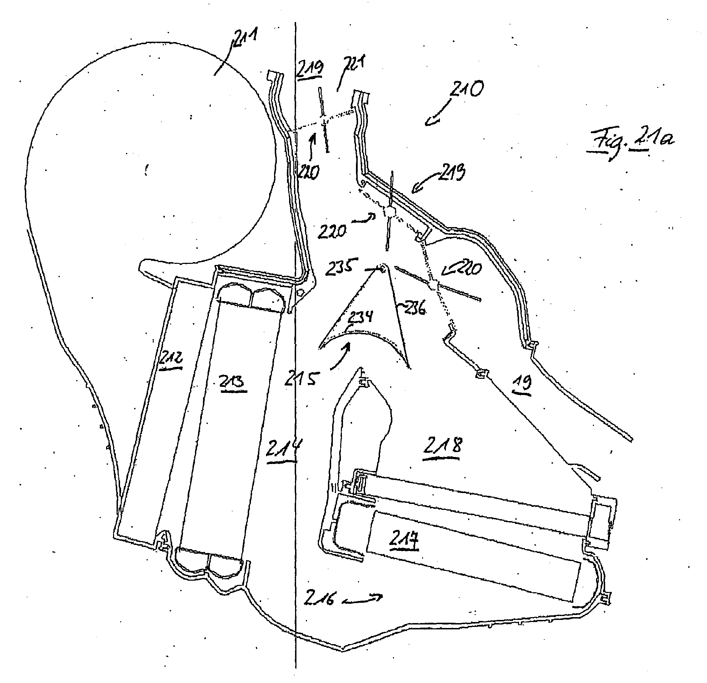

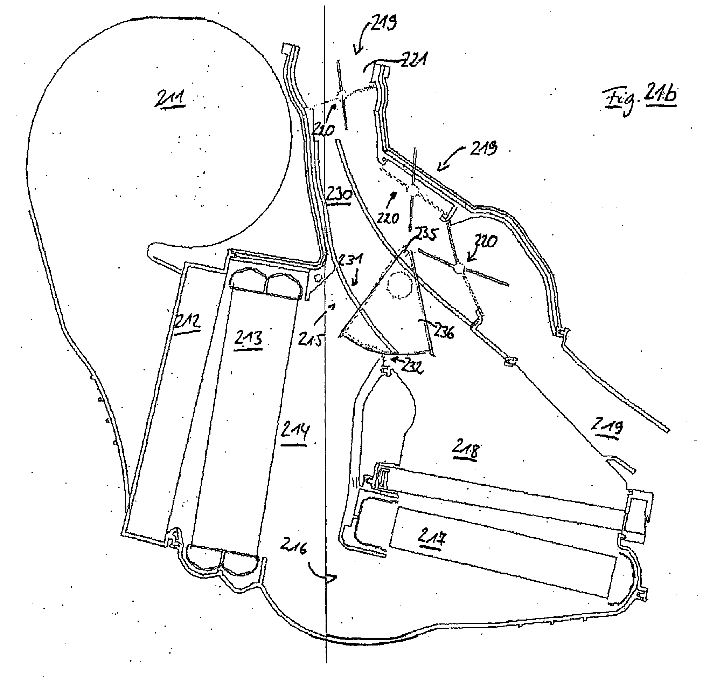

Die drei Figurenpaare der Figuren 20a,20b; 21 a,21 b; 22a,22b zeigen jeweils eine Schnittdarstellung durch eine Klimatisierungseinrichtung. Die mit a bezeichneten Figuren zeigen dabei immer einen Schnitt durch den Bereich außerhalb eines Bypasskanals, während die mit b bezeichneten Figuren den Schnitt im Bereich des Bypasskanals zeigen, wobei die Klappenstellung gleicher Figurenpaare einander entsprechen. Die Position des Bypasskanals in der Klimatisierungseinrichtung ist wählbar. Es können auch mehr als ein Bypasskanal vorgesehen sein, wobei dann jeder Bypasskanal eine Mischklappe aufweist. Der Bypasskanal kann dabei insbesondere einseitig oder beidseitig lateral an der Klimatisierungseinrichtung oder aber mittig ausgebildet sein.

Die Figurenpaare 20 bis 22 zeigen eine Klimatisierungseinrichtung 210 in Querschnittsdarstellung. Innerhalb des Gebläsegehäuses 211 ist ein nicht dargestelltes Gebläse, ein Radiallüfter angeordnet, der in der Senkrechten zur Schnittebene Luft ansaugt.

Die vom Radiallüfter geförderte Luft durchströmt zunächst den Luftfilter 212 und dann den Verdampfer 213, in dem die Luft abgekühlt wird. Stromabwärts des Verdampfers 213 schließt sich der Verteilerraum 214 an. In den Bereichen, in denen sich ein Bypasskanal 230 erstreckt, verschließt eine Wandung 231 des Bypasskanals 220 den ersten Strömungskanal 215 bis auf einen Schlitz 232 durch welchen hindurch die Mischklappe 233 geführt ist, wobei die Führung fluiddicht sein kann um Leckageströmungen zu vermeiden. In den Bereichen neben dem Bypasskanal führt der erste Strömungskanal 215 direkt in die Mischkammer 218.

Der zweite Strömungskanal 216 führt von dem Verteilerraum 214 über den Wärmetauscher 217 in die Mischkammer 218. Die in den drei Figurenpaaren in unterschiedlichen Stellungen, den beiden Endlagen und einer Zwischenstellung gezeigte Schaltklappe 234 bestimmt mit ihrer Stellung das Verhältnis zwischen dem geöffneten Strömungsquerschnitt von erstem Strömungskanal 215 zu zweitem Strömungskanal 216 und somit den Anteil des vom Verdampfer 213 kommenden Volumenstromes, der nicht über den Wärmetauscher 217 geführt wird. Damit wird die sich einstellende Temperatur der sich ergebenden Mischluft in der Mischkammer 218 gesteuert bzw. geregelt.

Von der Mischkammer 218 führen mehrere Luftaustrittskanäle 219 weg, wobei jedem dieser Kanäle eine Schaltklappe 220 zugeordnet ist, durch welche die Größe des Luftstroms in den entsprechenden Luftaustrittskanal 219 steuer- oder regelbar ist. Zum Erzielen einer Temperaturschichtung im Fahrzeug zweigen die Luftaustrittskanäle 219 an Stellen mit unterschiedlichem Mischungsverhältnis zwischen Luft aus erstem und zweitem Strömungskanal 215 und 216 ab, so dass unterschiedliche Temperaturen der Mischströme gegeben sind.

Einer der Luftaustrittskanäle ist der so genannte Defrostkanal 221. Dieser führt zu den Defrostdüsen welche unmittelbar im Bereich einer Scheibe, insbesondere der Frontscheibe eines Fahrzeugs angeordnet sind und dem schnellen Aufheizen der Scheibe bzw. dem Befreien der Scheibe von Beschlag durch kondensierenden Wasserdampf dient. Dabei zweigt der Defrostkanal 221 an einer Stelle ab, der einen hohen Anteil Luft aus dem ersten Strömungskanal aufweist und damit relativ kühl ist. Dies ist für die Aufheiz- und Beschlagvermeidungsfunktion hinderlich aber auch konstruktionsbedingt. Daher ist der Bypasskanal 230 vorgesehen, der im zweiten Strömungskanal 216 abzweigt und im Defrostkanal 221 direkt vor der entsprechenden Schaltklappe 221 mündet. Hierdurch wird dem Luftstrom im Defrostkanal 221 ein erhöhter Warmluftanteil zugeführt. Über die Stellung der Mischklappe 233 ist dabei der Volumenstrom durch den Defrostkanal 221 veränderbar, weil der freie Strömungsquerschnitt von der Mischklappenstellung abhängig ist. Die dem Defrostkanal 221 zugeordnete Schaltklappe 220 steuert dabei die Größe des Volumenstromes durch den Defrostkanal 221, nicht jedoch den Anteil des Volumenstromes aus dem Bypasskanal 230 darin.

Dabei sind in der dargestellten Ausführungsform die Mischklappe 233 und die Schaltklappe 234 auf einer gemeinsamen Schwenkachse 235 angeordnet, wobei die Klappen gewölbte Oberflächen 237 aufweisen und über sich radial aufweitende Schwenkarme 236 an der Schwenkachse 235 angelegt sind. Die Schwenkarme 236 weisen dabei zumindest eine teilweise geschlossene Seitenfläche auf, die eine Trennfunktion zwischen Bypasskanal 230 und erstem Strömungskanal 215 hat. Somit ist die Stellung der Misch-klappe 233 unmittelbar an die Stellung der Schaltklappe 234 gekoppelt und diese sind zusammen durch Verdrehen der Schwenkachse gegenüber dem Gehäuse mittels eines Stellers 238, wie in den Figuren 20 bis 22, gezeigt lageveränderbar.

Ist wie in den Figuren 20a und 20b gezeigt, der erste Strömungskanal 215 geschlossen, so wird die gesamte Luftströmung über den Wärmetauscher 217 geführt und dort erwärmt. Der Bypasskanal 230 ist dann maximal geöffnet und ein hoher Volumenstromanteil Warmluft wird dem Defrostkanal 221 zugeführt. Dies führt zu einer relativ hohen Lufttemperatur im Defrostkanal 221 und einem schnellstmöglichen Erwärmen der zugeordneten Fensterscheibe bzw. Frontscheibe und somit zu beschlag- und vereisungsfreier Scheibe.

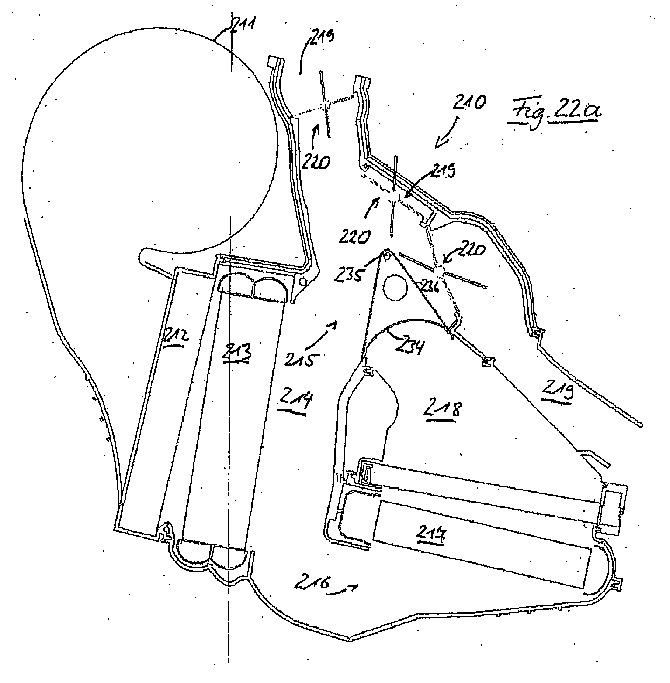

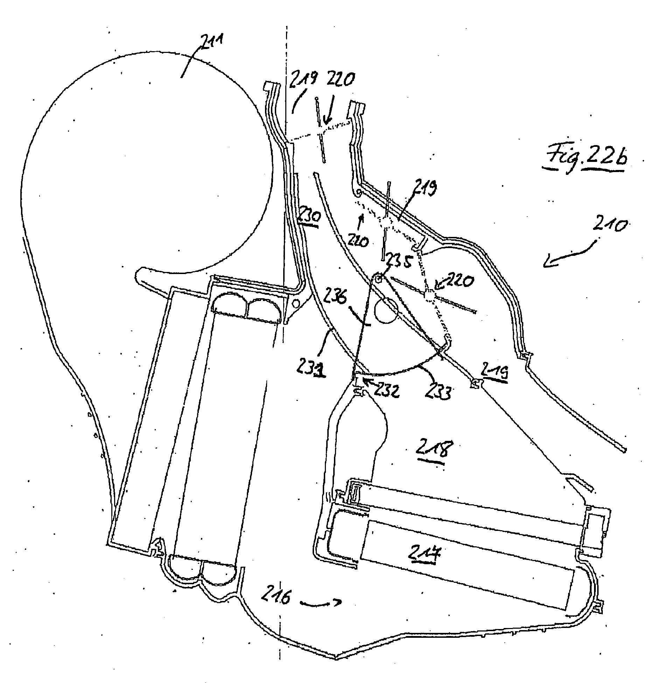

Ist wie in Figuren 22a und 22b gezeigt, der erste Strömungskanal 215 geöffnet, so wird die gesamte Luftströmung über den ersten Strömungskanal 215 und damit am Wärmetauscher 217 vorbei geführt. Der Bypasskanal 230 ist dann verschlossen und dem Defrostkanal 221 wird keine erwärmte Luft aus dem Bypasskanal 230 zugeführt. Dies führt zu einer relativ niedrigen Lufttemperatur im Defrostkanal 221 und ein rasches Abkühlen des Innenraumes, sowie das Erzeugen einer günstigen Luftschichtung im Fahrzeuginnenraum werden gefördert.

In der in den Figuren 21 a und 21 b dargestellten Zwischenstellung werden jeweils Teilströme erzeugt. Damit wird über den Bypasskanal 230 ein geringer Warmluftvolumenstrom zum Defrostkanal 221 geführt, dieser weist zwar gegenüber der ansonsten durch' ihn durchströmenden Luft eine erhöhte Temperatur auf, diese ist aber nicht so stark erhöht, wie wenn der Bypasskanal frei durchströmbar wäre. Hierdurch wird im Bereich der dem Defrostkanal 221 zugeordneten Scheibe eine erwärmte Luft zugeführt, die dennoch die Temperaturschichtung im Fahrzeug nicht unnötig stark stört. Der Grad der Erwärmung wird durch die Stärke der gewünschten Temperaturänderung beeinflusst, aus der die Stellung der Schaltklappe 234 bestimmt wird.

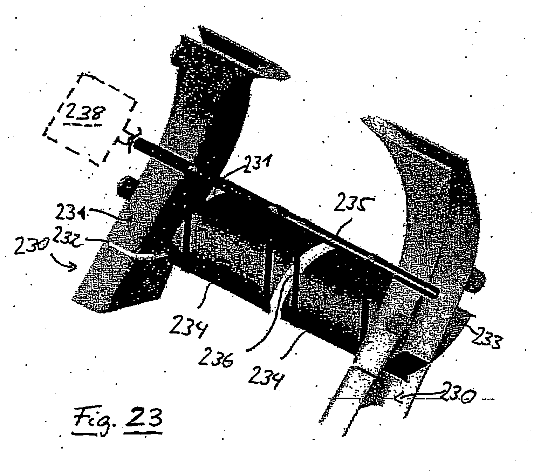

Die Figur 23 zeigt in perspektivischer Darstellung ein Klappenelement, das Mischklappe 233 und Schaltklappe 234 vereint. Dabei ist das Mischklappensegment 233 konvex gewölbt, während das Schaltklappensegment 234 konkav gewölbt ist. Die ellipsenförmige Linse zwischen Schaltklappensegment 234 und Mischklappensegment 233 bildet eine Wandung 231 die auch für die fluidische Trennung zwischen dem Bypasskanal 230 und dem ersten Strömungskanal 215 in-diesem Bereich, in dem auch der Schlitz 231 im Bypasskanal 230 verläuft, sorgt. Dabei kann diese Wandung auch Teil eines sich radial nach außen weitenden Schwenkarms 236 sein. In der dargestellten Ausführungsform sind die Schwenkarme 236 jedoch als getrennt davon ausgebildete Stege ausgeführt. Die Fig. 23 zeigt dabei zwei lateral angeordnete Bypasskanäle 231, die je eine Mischklappe 233 aufweisen, wobei dazwischen sich der erste Strömungskanal 216 erstreckt, der mittels zweier darin angeordneten Schaltklappen 234 verschließbar ist. Dabei ist der Steller 238, der für das Erzeugen der Stellbewegung der Klappen zuständig ist in dieser Figur gestrichelt angedeutet. Der Steiler 238 wird dabei von einer entsprechenden Steuereinheit angesteuert, durch die auch erfindungsgemäße Verfahren durchgeführt werden.

## Patentansprüche

1. Klimatisierungseinrichtung für Fahrzeuge,
• mit einem Gebläse zum Erzeugen eines Luftstromes,
• einem stromabwärts des Gebläses angeordneten, vom Luftstrom durchströmten Verdampfer (4),
• einer dem Verdampfer nachgeordneten Mischklappe (10),
• wobei der Luftstrom mittels der Mischklappe (10) auf einen ersten Strömungskanal (7) und einen zweiten Strömungskanal (8) aufteilbar ist, wodurch ein erster und ein zweiter Teilluftstrom erzeugbar ist,
• wobei der erste Strömungskanal-Kaltluftkanal in eine Mischkammer (9) einmündet,
• während in dem zweiten Strömungskanal-Warmluftkanal ein Wärmetauscher (5) zum Erwärmen des zweiten Teilluftstroms angeordnet ist und der zweite Strömungskanal (8) stromabwärts des Wärmetauschers in die Mischkammer (9) einmündet,
• wobei in der Mischkammer (9) aus dem ersten und zweiten Teilluftstrom ein Mischluftstrom erzeugbar ist, wobei von der Mischkammer Luftaustrittskanäle (16) in unterschiedliche Bereiche des Fahrzeuginnenraums führen,
• und die Mischklappe (10) um eine Rotationsachse (11) zwischen einer ersten Endposition, in der sie den ersten Strömungskanal (7) vollständig verschließt und einer zweiten Endposition, in der sie den zweiten Strömungskanal (8) vollständig verschließt, verschwenkbar ist, und in den dazwischen gelagerten Positionen einen direkten Durchtritt von Kaltluft aus dem ersten Strömungskanal (7) in den zweiten Strömungskanal (8) ermöglicht,
wobei die Mischklappe (10) zur Aufteilung des Luftstromes aus mindestens drei Abschnitten (12, 13) besteht und die Rotationsachse (11) außerhalb dieser Abschnitte liegt, wobei ein erster Abschnitt (13) in radialer Richtung oder zumindest in einem spitzen Winkel zur radialen Richtung bezüglich der Rotationsachse (11), ein zweiter Abschnitt (12) konkav bezüglich der Rotationsachse (11) und ein dritter Abschnitt (13) , angeordnet sind, wobei der erste und der dritte Abschnitt (13) an gegenüberliegenden Enden des zweiten Abschnitts (12) so anschließen, dass die drei Abschnitte einen Wandbereich mit einer durchgehenden Kontur bilden, wobei die Mischklappe (10) im Querschnitt zur Achsrichtung eine, über die gesamte Länge der Mischklappe, gleich bleibende Kontur aufweist, **dadurch gekennzeichnet, dass** der dritte Abschnitt in radialer Richtung oder zumindest in einem spitzen Winkel zur radialen Richtung bezüglich der Rotationsachse (11) angeordnet ist.

2. Klimatisierungseinrichtung nach Anspruch 1, **dadurch gekennzeichnet, dass** die Abschnitte (12, 13) des Wandbereichs der Mischklappe (10) stetig ineinander übergehen.

3. Klimatisierungseinrichtung nach einem der vorangehenden Ansprüche, **dadurch gekennzeichnet, dass** die Klimatisierungseinrichtung eine Mischklappe (10) mit einem Wandbereich aufweist, wobei ein Ende eines Abschnitts (13) des Wandbereichs einen Anschlag bildet.

4. Klimatisierungseinrichtung nach einem der vorangehenden Ansprüche, **dadurch gekennzeichnet, dass** die Klimatisierungseinrichtung eine Mischklappe (10) mit einem Wandbereich aufweist, wobei zwei gegenüberliegende Enden zweier Abschnitte (13) des Wandbereichs jeweils einen Anschlag bilden.

5. Klimatisierungseinrichtung nach einem der vorangehenden Ansprüche, **dadurch gekennzeichnet, dass** die Klimatisierungseinrichtung eine Mischklappe (10) mit einem Wandbereich aufweist, wobei ein Abschnitt oder zwei Abschnitte (13) des Wandbereichs im Bereich der Anschlagsflächen Dichtbereiche aufweisen.

6. Klimatisierungseinrichtung nach einem der vorangehenden Ansprüche, **dadurch gekennzeichnet, dass** die Mischklappe (10) einen in seiner gesamten Fläche durchgehend stetigen Wandbereich aufweist.

7. Klimatisierungseinrichtung nach einem der vorangehenden Ansprüche, **dadurch gekennzeichnet, dass** der Wandbereich der Mischklappe (10) zumindest teilweise kreis- oder kreissegmentförmig ausgeführt ist.

8. Klimatisierungseinrichtung nach einem der vorhergehenden Ansprüche, **dadurch gekennzeichnet, dass** der Wandbereich der Mischklappe (10) zumindest teilweise in elliptischer, parabolischer, hyperbolischer oder einer anderen stetig gekrümmten Form ausgebildet ist.

9. Klimatisierungseinrichtung nach einem der vorhergehenden Ansprüche, **dadurch gekennzeichnet, dass** die Mischklappe (10) über sich kreissegmentförmig aufweitende, vorzugsweise auch randständig angeordnete Schwenkarme an der Schwenkachse angelenkt ist.

## Claims

1. An air-conditioning system for vehicles,
• with a blower for generating an air stream,
• an evaporator (4) which is arranged downstream of the blower and through which the air stream flows,
• a mixing flap (10) following the evaporator,
• wherein the air stream being apportionable by means of the mixing flap (10) to a first flow duct (7) and a second flow duct (8) , with the result that a first and a second part air stream can be generated,
• the first flow duct - cold-air duct issuing into a mixing chamber (9),
• while a heat exchanger (5) for warming the second part air stream is arranged in the second flow duct - warm-air duct and the second flow duct (8) issues, downstream of the heat exchanger, into the mixing chamber (9),
• a mixed air stream being capable of being generated from the first and the second part air stream in the mixing chamber (9) wherein air outlet ducts (16) are leading from the mixing chamber into different regions of the vehicle interior,
• and the mixing flap (10) being pivotable about an axis of rotation (11) between a first end position, in which it completely closes the first flow duct (7), and a second end position, in which it completely closes the second flow duct (8), and, in the intermediate positions, allowing a direct passage of cold air from the first flow duct (7) into the second flow duct (8), wherein the mixing flap (10) for apportioning the air stream consists of at least three sections (12, 13) and the axis of rotation (11) lies outside these sections, a first section (13) being arranged in the radial direction or at least at an acute angle to the radial direction with respect to the axis of rotation (11), a second section (12) being arranged concavely with respect to the axis of rotation (11), and a third section (13), wherein the first and the third section (13) adjoin opposite ends of the second section (12) so that the three sections form a wall region with a continuous contour, wherein the mixing flap (10) has, in cross section with respect to the axial direction, a contour which is constant over the entire length of the mixing flap,
**characterized in that** the third section (13) being arranged in the radial direction or at least at an acute angle to the radial direction with respect to the axis of rotation.

2. The air-conditioning system as claimed in claim 1, **characterized in that** the sections (12, 13) of the wall region of the mixing flap merge continuously one into the other.

3. The air-conditioning system as claimed in one of the preceding claims, **characterized in that** the air-conditioning system has a mixing flap (10) with a wall region, wherein one end of a section (13) of the wall region forming a stop.

4. The air-conditioning system as claimed in one of the preceding claims, **characterized in that** the air-conditioning system has a mixing flap (10) with a wall region, wherein two opposite ends of two sections (13) of the wall region in each case forming a stop.

5. The air-conditioning system as claimed in one of the preceding claims, **characterized in that** the air-conditioning system has a mixing flap (10) with a wall region, wherein one section or two sections of the wall region having sealing regions in the region of the stop surfaces.

6. The air-conditioning system as claimed in one of the preceding claims, **characterized in that** the mixing flap (10) has a wall region which is continuous in its entire surface.

7. The air-conditioning system as claimed in one of the preceding claims, **characterized in that** the wall region of the mixing flap (10) is designed at least partially circularly or in the form of a segment of a circle.

8. The air-conditioning system as claimed in one of the preceding claims, **characterized in that** the wall region of the mixing flap (10) is designed at least partially in an elliptic, parabolic, hyperbolic or another continuously curved shape.

9. The air-conditioning system as claimed in one of the preceding claims, **characterized in that** the mixing flap (10) is articulated on the pivot axis via pivoting arms which widen in the form of a segment of a circle and are preferably also arranged at the edge.

## Revendications

1. Dispositif de climatisation pour véhicules,
• avec une soufflante pour la génération d'un flux d'air,
• avec un évaporateur (4) disposé en aval de la soufflante, traversé par le flux d'air,
• avec un volet de recyclage (10) disposé en aval de l'évaporateur,
• le flux d'air étant divisible par le volet de recyclage (10) en un premier canal de circulation (7) et un deuxième canal de circulation (8), ce qui permet de générer un premier et un deuxième flux d'air partiels,
• le premier canal de circulation (canal d'air froid) débouchant dans une chambre de mélange (9) ,
• alors qu'un échangeur de chaleur (5) pour chauffer le deuxième flux d'air partiel est disposé dans le deuxième canal de circulation (canal d'air chaud), et que le deuxième canal de circulation (8) débouche dans la chambre de mélange (9) en aval de l'échangeur de chaleur,
• un flux d'air mixte pouvant être généré dans la chambre de mélange (9) à partir du premier et du deuxième flux d'air partiels, des canaux d'évacuation d'air (16) conduisant de la chambre de mélange vers des zones différentes de l'habitacle du véhicule,
• et le volet de recyclage (10) pouvant pivoter autour d'un axe de rotation (11) entre une première position finale où il obture complètement le premier canal de circulation (7) et une deuxième position finale où il obture complètement le deuxième canal de circulation (8), et permettant dans les positions intermédiaires un passage direct d'air froid du premier canal de circulation (7) au deuxième canal de circulation (8),
où le volet de recyclage (10) se compose d'au moins trois segments (12, 13) pour la division du flux d'air, et l'axe de rotation (11) est situé à l'extérieur de ces segments, un premier segment (13) étant disposé en direction radiale
ou au moins suivant un angle aigu avec la direction radiale par rapport à l'axe de rotation (11), un deuxième segment (12) étant disposé en concavité relativement à l'axe de rotation (11), le premier et le troisième segments (13) étant raccordés sur des extrémités opposées du deuxième segment (12) de telle sorte que les trois segments forment une zone de paroi avec un contour continu, le volet de recyclage (10) présentant en section transversale à la direction axiale un contour constant sur toute la longueur du volet de recyclage,
**caractérisé en ce que** le troisième segment (13) est disposé en direction radiale ou au moins suivant un angle aigu avec la direction radiale par rapport à l'axe de rotation (11).

2. Dispositif de climatisation selon la revendication 1, **caractérisé en ce que** les segments (12, 13) de la zone de paroi du volet de recyclage (10) sont raccordés entre eux de manière continue.

3. Dispositif de climatisation selon l'une des revendications précédentes, **caractérisé en ce que** ledit dispositif de climatisation comporte un volet de recyclage (10) avec une zone de paroi, une extrémité d'un segment (13) de la zone de paroi formant une butée.

4. Dispositif de climatisation selon l'une des revendications précédentes, **caractérisé en ce que** ledit dispositif de climatisation comporte un volet de recyclage (10) avec une zone de paroi, deux extrémités opposées de deux segments (13) de la zone de paroi formant une butée chacune.

5. Dispositif de climatisation selon l'une des revendications précédentes, **caractérisé en ce que** ledit dispositif de climatisation comporte un volet de recyclage (10) avec une zone de paroi, un segment ou deux segments (13) de la zone de paroi présentant des zones d'étanchéité au niveau des surfaces de butée.

6. Dispositif de climatisation selon l'une des revendications précédentes, **caractérisé en ce que** le volet de recyclage (10) présente une zone de paroi continue sur toute sa surface.

7. Dispositif de climatisation selon l'une des revendications précédentes, **caractérisé en ce que** la zone de paroi du volet de recyclage (10) est réalisée au moins partiellement avec une forme circulaire ou en arc de cercle.

8. Dispositif de climatisation selon l'une des revendications précédentes, **caractérisé en ce que** la zone de paroi du volet de recyclage (10) est réalisée au moins partiellement avec une forme elliptique, parabolique, hyperbolique ou avec une autre forme courbe continue.

9. Dispositif de climatisation selon l'une des revendications précédentes, **caractérisé en ce que** le volet de recyclage (10) est articulé sur l'axe de pivotement par des bras pivotants s'étendant en forme de segments de cercle, de préférence disposés aussi en bordure.
